# EUROPÄISCHE PATENTANMELDUNG

(11) **EP 3 136 012 A1**
(43) Veröffentlichungstag der Anmeldung: **01.03.2017**
(21) Anmeldenummer: 16185651.3
(22) Anmeldetag: 25.08.2016
(51) Int. Cl.: F24F 13/20, B01D 46/00, F24F 3/16

(54) **MOBILE ENTSTAUBUNGSVORRICHTUNG**

(30) Priorität: 26.08.2015 DE 102015010979
(71) Anmelder: aeropur GmbH, 71732 Tamm (DE)
(72) Erfinder: Hummel, Reiner, 90455 Nürnberg (DE); Lauterbach, Uwe, 71732 Tamm (DE)
(74) Vertreter: DREISS Patentanwälte PartG mbB

(57) **Zusammenfassung**

Die vorliegende Erfindung betrifft eine mobile Entstaubungsvorrichtung (10) zur Reinigung von verschmutzter Raumluft, mit einem Gehäuse (11), in dem mindestens ein Filterelement (28, 29) aufgenommen ist, mit mindestens einem Ventilator (18) zum Ansaugen der verschmutzten Raumluft, mit einer Einlassöffnung (33) für die verschmutzte Raumluft und mit einer Auslassöffnung für gereinigte Raumluft. Erfindungsgemäß ist vorgesehen, dass die Einlassöffnung (33) sich über den gesamten Querschnitt des Gehäuses (11) erstreckt, dass die Auslassöffnung als an mindestens einer Gehäusewand (34) offener Reinluftraum (23) ausgebildet und oberhalb eines Unterbodens (15) des Gehäuses (11) angeordnet ist, dass im Gehäuse (11) oberhalb des Reinluftraums (23) ein Zwischenboden (17) aufgenommen ist, in dem der mindestens eine Ventilator (18) befestigt ist, dass im Gehäuse (11) oberhalb des Zwischenbodens (17) eine Auflageschulter (25) vorgesehen ist, auf der ein mindestens einen Hauptfilter (28) tragender Filterhalter (27) aufliegt, und dass auf dem Filterhalter (27) mindestens ein in einem Rahmen (31) gehaltener Vorfilter (29) aufliegt.

## Beschreibung

Die vorliegende Erfindung betrifft eine mobile Entstaubungsvorrichtung zur Reinigung von verschmutzter Raumluft, mit einem Gehäuse, in dem mindestens ein Filterelement aufgenommen ist, mit mindestens einem Ventilator zum Ansaugen der verschmutzten Raumluft, mit einer Einlassöffnung für die verschmutzte Raumluft und mit einer Auslassöffnung für gereinigte Raumluft.

Eine gattungsgemäße mobile Entstaubungsvorrichtung ist aus der deutschen Gebrauchsmusterschrift DE 92 06 851 U1 bekannt. Diese Entstaubungsvorrichtung arbeitet in einer ersten Hauptfilterstufe nach dem Zyklon-Prinzip. In einer zusätzlichen Filterstufe ist ein Feinstaubfilter nachgeschaltet. Diese bekannte Entstaubungsvorrichtung ist komplex aufgebaut und weist aufgrund der zahlreichen verbauten Komponenten vergleichsweise große Außenabmessungen auf.

Die Aufgabe der vorliegenden Erfindung besteht darin, eine gattungsgemäße Entstaubungsvorrichtung derart weiterzubilden, dass sie bei einfachem, kompaktem Aufbau und geringem Energieverbrauch möglichst effizient arbeitet.

Die Lösung besteht in einer mobilen Entstaubungsvorrichtung mit den Merkmalen des Patentanspruchs 1. Erfindungsgemäß ist vorgesehen, dass die Einlassöffnung sich über den qesamten Querschnitt des Gehäuses erstreckt, dass die Auslassöffnung als an mindestens einer Gehäusewand offener Reinluftraum ausgebildet und oberhalb eines Unterbodens des Gehäuses angeordnet ist, dass im Gehäuse oberhalb des Reinluftraums ein Zwischenboden aufgenommen ist, in dem der mindestens eine Ventilator befestigt ist, dass im Gehäuse oberhalb des Zwischenbodens eine Auflageschulter vorgesehen ist, auf der ein mindestens einen Hauptfilter tragender Filterhalter aufliegt, und dass auf dem Filterhalter mindestens ein in einem Rahmen gehaltener Vorfilter aufliegt.

Der wesentliche Vorteil der erfindungsgemäßen Entstaubungsvorrichtung besteht darin, dass keine Rohr- oder Schlauchleitungen für den Transport der Raumluft vorgesehen sind, entlang derer Druckverluste auftreten können. Vielmehr wird die verschmutzte Raumluft über den gesamten Querschnitt des Gehäuses der erfindungsgemäßen Entstaubungsvorrichtung (das heißt, über die gesamte nach außen gerichtete Oberfläche des Vorfilters) angesaugt, und die gereinigte Raumluft wird in Bodennähe in radialer Richtung nach außen abgegeben, wobei der Reinluftraum als Auslass für die gereinigte Raumluft wirkt. Die einzigen Druckverluste beim Betrieb der erfindungsgemäßen Entstaubungsvorrichtung werden im Wesentlichen vom Hauptfilter verursacht.

Diese erfindungsgemäße konstruktive Maßnahme hat zur Folge, dass der "Anlagenkennpunkt", d.h. der optimale Betriebspunkt der erfindungsgemäßen mobilen Entstaubungsvorrichtung nicht von derartigen, von Rohr- oder Schlauchleitungen verursachten Druckverlusten negativ beeinflusst wird. Vielmehr entspricht bei der erfindungsgemäßen Entstaubungsvorrichtung der "Anlagenkennpunkt" vollständig der Kennkurve des verwendeten Ventilators.

Dies bedeutet, dass die erfindungsgemäße Entstaubungsvorrichtung bei minimalem Stromverbrauch besonders effizient und geräuscharm arbeitet.

Da die gereinigte, vergleichsweise warme Raumluft in Bodennähe aus der erfindungsgemäßen Entstaubungsvorrichtung ausströmt, trägt sie zumindest im Ausströmbereich zu einer verbesserten Wärmeverteilung der Raumluft insgesamt bei.

Vorteilhafte Weiterbildungen ergeben sich aus den Unteransprüchen.

Zweckmäßigerweise ist unterhalb des Unterbodens ein durch eine Bodenplatte abgeschlossener Hohlraum zur Aufnahme mechanischer und elektrischer Komponenten zum Betrieb der Entstaubungsvorrichtung ausgebildet, so dass für die erfindungsgemäße Entstaubungsvorrichtung eine besonders kompakte Bauweise verwirklicht werden kann.

Vorteilhafterweise ist oberhalb des Zwischenbodens ein mit dem Ventilator in Wirkverbindung stehendes Druckmessgerät vorgesehen um bei von einem verstopften Filter verursachten übermäßigem Druckverlust einen rechtzeitigen Filterwechsel zu signalisieren.

Vorzugsweise ist der Ventilator als Radialventilator mit rückwärts gekrümmten Schaufeln ausgebildet. Derartige Ventilatoren haben sich als besonders leistungsfähig und für die erfindungsgemäße Entstaubungsvorrichtung als hervorragend geeignet erwiesen.

Als Hauptfilter wird vorzugsweise ein Feinstaubfilter und/oder Schwebstofffilter verwendet, abhängig von der Qualität der zu reinigenden Raumluft. Der Vorfilter ist zweckmäßigerweise ein Grobstaubfilter.

Eine weitere vorteilhafte Weiterbildung sieht vor, dass unterhalb des Hauptfilters eine Vorrichtung zur Abgabe von UV-Strahlung vorgesehen ist, um einer eventuellen Verkeimung der Filter vorzubeugen.

Vorzugsweise wird die Effizienz der erfindungsgemäßen Entstaubungsvorrichtung in der Weise optimiert, dass die gesamte Entstaubungsvorrichtung gemäß den Eigenschaften des verwendeten Ventilators dimensioniert ist. Es ist erwünscht, dass mindestens ein 1:1-Raumluftaustausch erfolgt, d.h. innerhalb einer Stunde wird die komplette Raumluft eines Raumes ausgetauscht.

Die Filterelemente mit Filterfläche sowie die Gehäusemaße sind letztlich an der Kennkurve des Ventilators ausgerichtet. Die Filterfläche bzw. das Filtervolumen frisch eingesetzter Hauptfilter sind so ausgelegt, dass bei beim Betrieb des Ventilators mit 75% bis 90% seiner maximalen Leistung ein durch den Hauptfilter bestimmter Druckverlust erzeugt wird. Dieser Druckverlust entspricht auf der Kennkurve des Ventilators dem herstellerseitig definierten ersten Betriebspunkt des Ventilators. Die Filterfläche bzw. das Filtervolumen des Hauptfilter ist so ausgelegt, dass dieser Betriebspunkt eine addierte Filterleistung von Hauptfilter und Vorfilter in Kubikmeter Raumluft je Stunde definiert, die unter dem möglichen maximalen Durchsatz der Filter für die Raumluft liegt. Bei dieser Auslegung wird bei einem niedrigeren Druckverlust eine höhere Abscheideleistung als bisher bekannt erzeugt, wobei der Energieverbrauch der erfindungsgemäßen Entstaubungsvorrichtung deutlich reduziert ist. Der gewünschte Druckaufbau erfolgt somit bei minimalem Stromverbrauch und zugleich mit minimaler Geräuschentwicklung in db(A).

Ein weiterer Vorteil besteht darin, dass eine ggf. vorhandene Warnanzeige zum Wechsel des Hauptfilters anhand der Kennkurve des Ventilators eingestellt werden kann. Je stärker der Filter verschmutzt ist, desto weiter wandern die Kenndaten des Ventilators auf seiner Kennkurve in Richtung höherer Druckverluste. Anhand einer im Gehäuse vorgesehenen Druckmessvorrichtung kann der Druckverlust, bei dem ein Filterwechsel erfolgen sollte, genau gemessen werden. Bei Erreichen des anhand der Kennkurve des Ventilators voreingestellten Druckverlusts wird die Warnanzeige aktiviert.

Ein zusätzlicher Vorteil der erfindungsgemäß betriebenen Entstaubungsvorrichtung besteht darin, dass sie wesentlich kompakter gebaut werden kann als im Stand der Technik bekannt. Dies ist sowohl aufgrund der Effizienz, mit der die erfindungsgemäße Entstaubungsvorrichtung arbeitet, als auch aufgrund der einfachen Bauweise ohne Rohr- oder Schlauchleitungen möglich.

Im Ergebnis wird eine erfindungsgemäße mobile Entstaubungsvorrichtung erhalten, die effizient, geräuscharm und energiesparend arbeitet. Die erfindungsgemäße Entstaubungsvorrichtung ermöglicht ferner eine flexible Anwendung beim Kunden, der aufgrund der hohen Effektivität je nach Raumgröße zwei oder mehrere erfindungsgemäße mobile Entstaubungsvorrichtungen kombinieren kann. Dies ist in der Regel wesentlich günstiger als die Bereitstellung eines einzigen Großgeräts.

Ausführungsbeispiele der Erfindung werden im Folgenden anhand der beigefügten Zeichnungen näher erläutert. Es zeigen in einer schematischen, nicht maßstabsgetreuen Darstellung:
- Figur 1: ein Ausführungsbeispiel des Aufbaus einer erfindungsgemäßen mobilen Entstaubungsvorrichtung in einer perspektivischen Darstellung;
- Figur 2: das Ausführungsbeispiel gemäß Figur 1 im Schnitt;
- Figur 3: Leistungskenndaten eines Ventilators für ein erstes Ausführungsbeispiel einer erfindungsgemäßen mobilen Entstaubungsvorrichtung in der Bauweise gemäßen den Figuren 1 und 2;
- Figur 4: Leistungskenndaten eines Ventilators für ein weiteres Ausführungsbeispiel einer erfindungsgemäßen mobilen Entstaubungsvorrichtung in der Bauweise gemäßen den Figuren 1 und 2;
- Figur 5: Leistungskenndaten eines Ventilators für ein weiteres Ausführungsbeispiel einer erfindungsgemäßen mobilen Entstaubungsvorrichtung in der Bauweise gemäßen den Figuren 1 und 2.

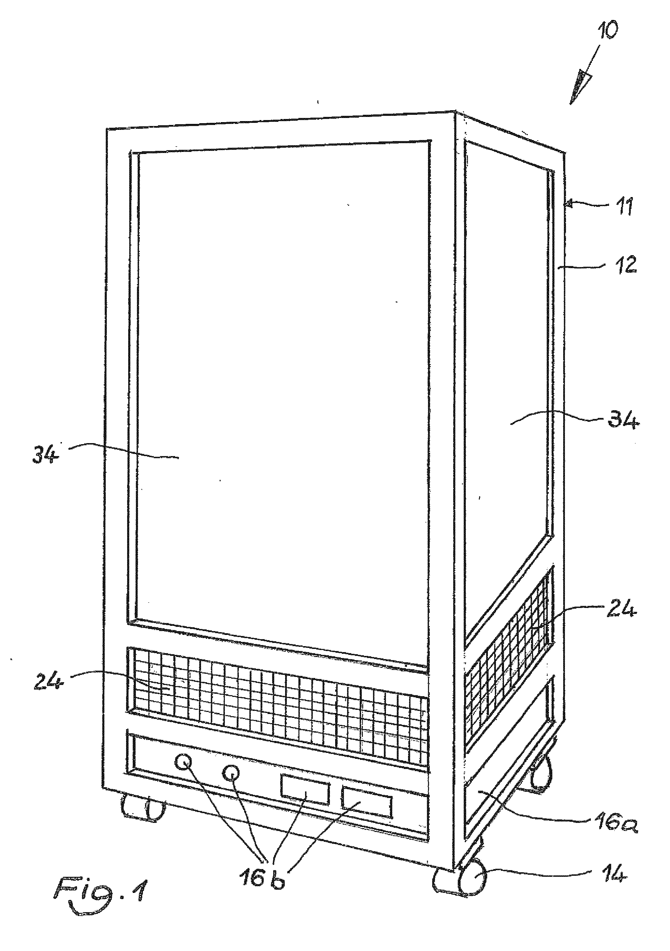

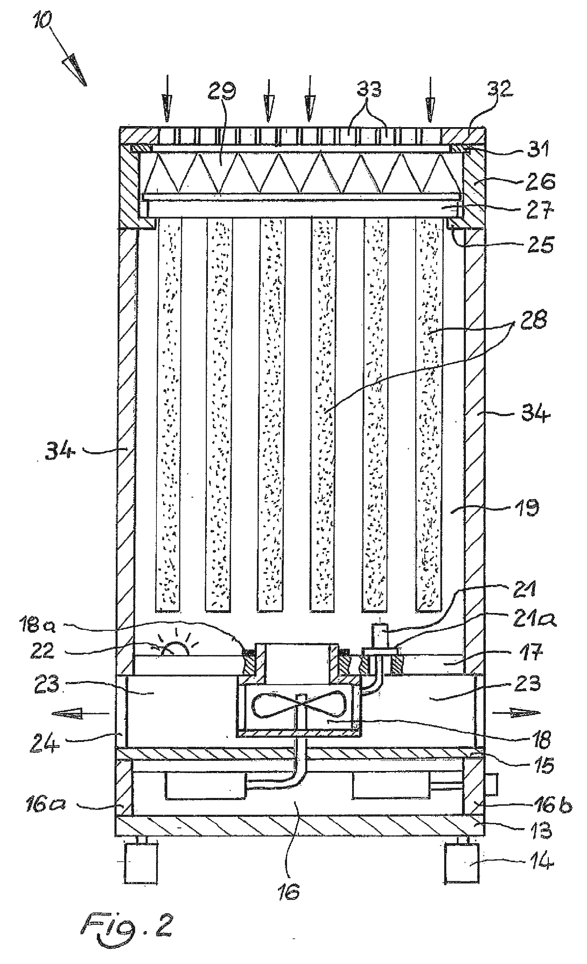

Die Figuren 1 und 2 zeigen den grundsätzlichen Aufbau eines Ausführungsbeispiels einer erfindungsgemäßen mobilen Entstaubungsvorrichtung 10. Die Entstaubungsvorrichtung 10 weist ein Gehäuse 11 auf. Das Gehäuse 11 weist einen Gehäuserahmen 12 auf, der im Ausführungsbeispiel aus einem Aluminiumwerkstoff besteht. Am unteren Ende des Gehäuserahmens 12 ist eine Bodenplatte 13 vorgesehen, die das Gehäuse 11 nach außen abschließt und im Ausführungsbeispiel mit Rollen 14 versehen ist, um die Entstaubungsvorrichtung 10 bequem bewegen zu können. Oberhalb der Bodenplatte 13 und zu dieser beabstandet ist ein Unterboden 15 in den Gehäuserahmen 12 aufgenommen. Damit ist ein Hohlraum 16 gebildet, in welchem mechanische und elektrische Komponenten zum Betrieb der Entstaubungsvorrichtung 10 aufgenommen sind. Der Hohlraum 16 ist nach allen Seiten durch Wandelemente 16a abgeschlossen, wobei ein Wandelement 16a mit Bedienungselementen 16b versehen ist, bspw. Ein- und Ausschaltknopf, Warnanzeige für den Wechsel des Hauptfilter 28 (siehe unten) oder Anzeige der Betriebsstunden der Entstaubungsvorrichtung 10.

Oberhalb des Unterbodens 15 und beabstandet zu diesem ist ein Zwischenboden 17 in den Gehäuserahmen 12 aufgenommen. Im Zwischenboden 17 ist ein Ventilator 18 befestigt, der in den über dem Zwischenboden 17 gebildeten Filterraum 19 hineinragt. Der Ventilator 18 ist mittels einer Dichtung 18a abgedichtet, um zu verhindern, dass Raumluft außerhalb des Ventilators 18 in den Reinluftraum 23 (siehe unten) strömt. Der Ventilator 18 ist im Ausführungsbeispiel ein Radialventilator mit rückwärts gekrümmten Schaufeln. Derartige Ventilatoren sind bspw. als EC-Radialventilatoren aus der Serie "GreenTech" des Unternehmens ebm-pabst Deutschland im Handel zu erwerben.

Ferner ist im Zwischenboden 17 ein Druckmessgerät 21 befestigt, welches mit dem Ventilator 18 in an sich bekannter Weise in Wirkverbindung steht. Auf dem Zwischenboden 17 können ferner ein oder mehrere UV-Strahler 22 angeordnet sein, welche zur Abtötung evtll. auftretender Keime dienen. Das Druckmessgerät 21 ist wie der Ventilator 18 mit einer Abdichtung 21 a versehen.

Der von dem Unterboden 15 und dem Zwischenboden 17 gebildete Hohlraum ist als Reinluftraum 23 ausgebildet, da der Ventilator 18 die gereinigte Raumluft durch den Zwischenboden 17 hindurch in den Reinluftraum 23 transportiert. Der Reinluftraum 23 ist im Ausführungsbeispiel auf drei seiner Seiten mit einem Gitter 24 versehen, durch welches die gereinigte Raumluft ins Freie strömt. Der Reinluftraum 23 wirkt also als Auslass für die gereinigte Raumluft.

Im Filterraum 19 ist im Ausführungsbeispiel in der Nähe des oberen Endes des Gehäuserahmens 12 eine umlaufende Auflageschulter 25 vorgesehen. Im Ausführungsbeispiel ist die Auflageschulter 25 einstückig mit einem Filterrahmen 26 ausgebildet, der den oberen Teil des Gehäuserahmens 12 bildet. Die Auflageschulter 25 dient zur Auflage eines Filterhalters 27, der einen Hauptfilter 28 trägt. Der Hauptfilter 28 ist im Ausführungsbeispiel als Feinstaubfilter der Partikelfilterklasse F9 ausgelegt, vorzugsweise als Taschenfilter. Die Partikelfilterklasse ist je nach den Anforderungen des Einzelfalls selbstverständlich frei wählbar.

Der Filterrahmen 26 nimmt ferner einen Vorfilter 29 auf, der seinerseits in einem Rahmen 31 sitzt, welcher auf dem Filterhalter 27 aufliegt. Der Vorfilter 29 ist im Ausführungsbeispiel als Grobstaubfilter der Partikelfilterklasse G4 ausgelegt. Die Partikelfilterklasse (bspw. G3 bis M5) ist je nach den Anforderungen des Einzelfalls selbstverständlich frei wählbar.

Die verwendeten Filter entsprechen im Ausführungsbeispiel der DIN EN 779:2012 bzw. der DIN EN 1822 gemäß den Vorschriften des VDI 6022-4.3.9.. Sie sind insbesondere wasserabweisend, um eine Verkeimung zu vermeiden. Derartige Filter werden bspw. von den deutschen Unternehmen HS Luftfilterbau GmbH, Kiel und Kalthoff Luftfilter und Filtermedien GmbH, Selm, hergestellt.

Der Vorfilter 29 ist mit einem Abdeckgitter 32 bedeckt. Da das luftdurchlässige Abdeckgitter sich über den gesamten Querschnitt des Gehäuserahmens 12 erstreckt, wirkt dieser an seinem oberen freien Ende als Einlassöffnung 33 für die verschmutzte Raumluft.

Der Filterraum 19 ist mittels Gehäusewänden 34 nach außen abgeschlossen. Die Gehäusewände 34 bestehen im Ausführungsbeispiel aus Aluminiumverbundplatten mit einem Kern aus einem Kunststoff. Derartige Aluminiumverbundplatten sind bspw. unter der Marke "DIBOND^{©}" des Unternehmens 3A Composites GmbH, Singen, im Handel erhältlich.

Die erfindungsgemäße Entstaubungsvorrichtung 10 arbeitet wie folgt:
Der Ventilator 18 saugt im Betrieb durch das Abdeckgitter 32 und die Einlassöffnung 33, d.h. über den gesamten Querschnitt des Gehäuses 11, verschmutzte Raumluft an. Die Raumluft tritt durch den Vorfilter 29 und wird dabei im Ausführungsbeispiel von groben Verunreinigungen (Partikelgröße über 10 µm) befreit. Anschließend strömt die Raumluft durch den Hauptfilter 28, wo sie von Feinstaub bzw. Schwebstoffen (Partikelgröße im Ausführungsbeispiel zwischen 0,4 µm und 1 µm) befreit wird. Die gereinigte Raumluft tritt durch den Ventilator 18 in den Reinluftraum 23 ein und strömt durch die Gitter 24 ins Freie.

Die Raumluft wird somit während des Reinigungsprozesses großflächig in vertikaler Richtung von oben nach unten transportiert, wobei Rohr- oder Schlauchleitungen nicht benötigt werden. Vor dem Austreten aus der Entstaubungsvorrichtung 10 wird die gereinigte Raumluft radial nach außen geleitet und strömt auf drei Seiten der Entstaubungsvorrichtung 10 (über einen Winkel von 270 Winkelgrad) in Bodennähe ins Freie.

Der Druckmesser 21 dient zur Messung des Druckverlusts im Filterraum 19, der mit zunehmender Verschmutzung des Hauptfilters 28 ansteigt. Bei einem definierten, voreingestellten Druckverlust sendet der Druckmesser 21 in an sich bekannter Weise ein Signal an eine Warneinrichtung, die optisch und/oder akustisch auf den notwendigen Wechsel des Hauptfilters 28 hinweist. Der Verschmutzungsgrad des Vorfilters 29 wird hingegen optisch kontrolliert.

Im Folgenden werden drei Ausführungsbeispiele für drei erfindungsgemäße Auslegungen der erfindungsgemäßen Entstaubungsvorrichtung 10 beschrieben. Diese drei Ausführungsbeispiele weisen den soeben beschriebenen Aufbau und die soeben beschriebene Funktionsweise auf. Daher wird für diese drei Ausführungsbeispiele auf die Figuren 1 und 2 Bezug genommen, und es werden dieselben Bezugszeichen verwendet. Die drei Ausführungsbeispiele unterscheiden sich lediglich in ihren Abmessungen des Gehäuses 11 und des Hauptfilters 28 sowie in den Leistungskenndaten des Ventilators 18.

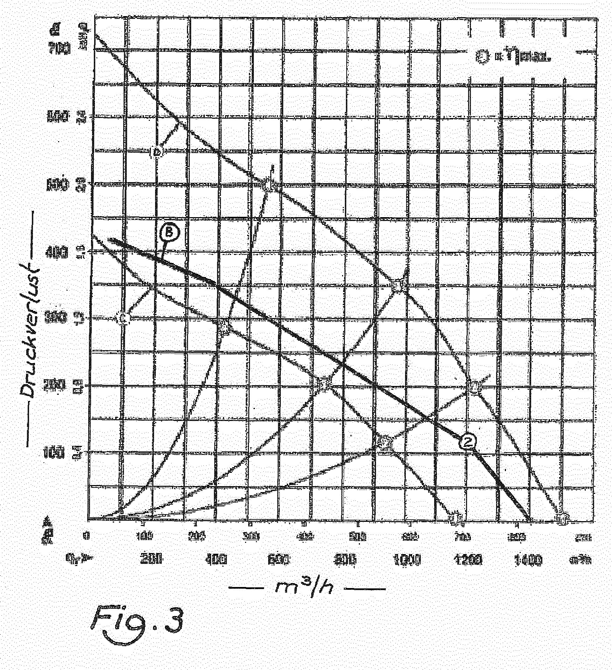

### Ausführungsbeispiel 1 (Figur 3)

Ein Radialventilator mit rückwärts gekrümmten Schaufel, der die Leistungskenndaten gemäß Linie B in Figur 3 besitzt und einen maximalen Volumenstrom von 1.400 m³/h erreicht, ist optimal geeignet für eine erfindungsgemäße mobile Entstaubungsvorrichtung 10 der folgenden Auslegung:

| | |
|---|---|
| Außenmaße (L × B × H) in cm: | 46 × 46 × 89 |
| Volumen des Filterraums 19: | 0,11 m³ |
| Maße des Vorfilters 29 (G4, Filterzelle) in mm: | 390 × 390 × 47 |
| Maße des Hauptfilter 28 (F9, Taschenfüter) in mm: | 390 × 390 × 500 |
| Anfangs-Filterleistung beider Filter kombiniert: | 1.200 m³/h |

Die Maße des Hauptfilter 28 und des Filterraums 19 sind so bemessen, dass eine Anfangs-Filterleistung von 1.200 m³ Luft pro Stunde erzielt wird sowie ein Anfangsdruckverlust von 130 Pascal (+/- 20 Pascal) resultiert. Dieser Startpunkt entspricht dem Punkt 2 der Linie B in Figur 3. Dabei erreicht der Ventilator 18 lediglich 75% bis 90% seiner Nennleistung und entwickelt einen Geräuschpegel von lediglich 61 bis 66 db(A). Mit zunehmender Betriebsdauer wandert der Punkt 2 auf der Linie B nach links, das heißt, aufgrund der zunehmenden Verschmutzung des Hauptfilters 28 nimmt der Druckverlust zu. Umgekehrt muss die Leistung des Ventilators 18, um den Druckverlust konstant zu halten, kontinuierlich gesteigert werden. Ab einem bestimmten, frei wählbaren Punkt auf der Linie B, das heißt, bei einem definierten erhöhten Druckverlust (spätestens am dritten Betriebspunkt der Linie B in Figur 3), übermittelt das Druckmessgerät 21 ein Signal an eine Warneinrichtung, um auf den notwendigen Wechsel des Hauptfilters 28 hinzuweisen.

Bei dieser Auslegung wird bei einem niedrigeren Druckverlust eine höhere Abscheideleistung als bisher bekannt erzeugt, wobei der Energieverbrauch der erfindungsgemäßen Entstaubungsvorrichtung deutlich reduziert ist. Der gewünschte Druckaufbau erfolgt somit bei minimalem Stromverbrauch und zugleich mit minimaler Geräuschentwicklung in db(A).

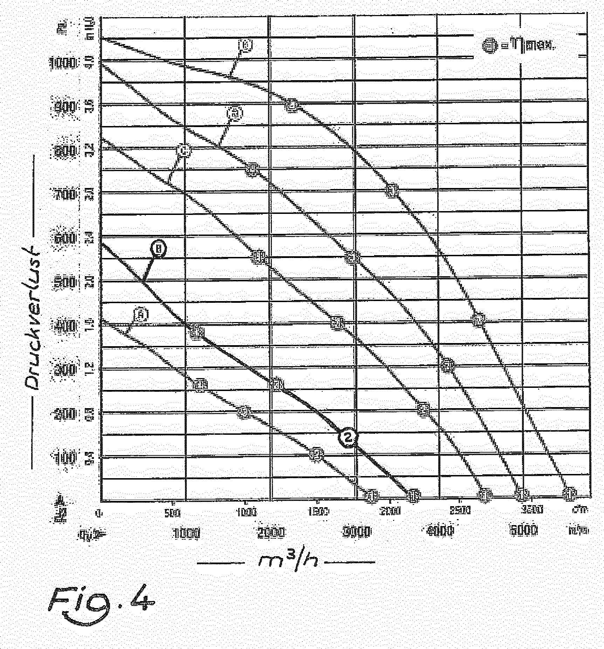

### Ausführungsbeispiel 2 (Figur 4)

Ein Radialventilator mit rückwärts gekrümmten Schaufel, der die Leistungskenndaten gemäß Linie B in Figur 4 besitzt und einen maximalen Volumenstrom von 3.700 m³/h erreicht, ist optimal geeignet für eine erfindungsgemäße mobile Entstaubungsvorrichtung 10 der folgenden Auslegung:

| | |
|---|---|
| Außenmaße (L × B × H) in cm: | 66 × 66 × 120 |
| Volumen des Filterraums 19: | 0,29 m³ |
| Maße des Vorfilters 29 (G4, Filterzelle) in mm: | 592 × 592 × 47 |
| Maße des Hauptfilter 28 (F9, Taschenfilter) in mm: | 592 × 592 × 600 |
| Anfangs-Filterleistung beider Filter kombiniert: | 3.000 m³/h |

Die Maße des Hauptfilter 28 und des Filterraums 19 sind so bemessen, dass eine Anfangs-Filterleistung von 3.000 m³ Luft pro Stunde erzielt wird sowie ein Anfangsdruckverlust von 150 Pascal (+/- 20 Pascal) resultiert. Dieser Startpunkt entspricht dem Punkt 2 der Linie B in Figur 4. Dabei erreicht der Ventilator 18 lediglich 75% bis 90% seiner Nennleistung und entwickelt einen Geräuschpegel von lediglich 63 bis 68 db(A). Mit zunehmender Betriebsdauer wandert der Punkt 2 auf der Linie B nach links, das heißt, aufgrund der zunehmenden Verschmutzung des Hauptfilter 28 nimmt der Druckverlust zu. Umgekehrt muss die Leistung des Ventilators 18, um den Druckverlust konstant zu halten, kontinuierlich gesteigert werden. Ab einem bestimmten, frei wählbaren Punkt auf der Linie B, das heißt, bei einem definierten erhöhten Druckverlust (spätestens am dritten Betriebspunkt der Linie B in Figur 4), übermittelt das Druckmessgerät 21 ein Signal an eine Warneinrichtung, um auf den notwendigen Wechsel des Hauptfilter 28 hinzuweisen.

Bei dieser Auslegung wird bei einem niedrigeren Druckverlust eine höhere Abscheideleistung als bisher bekannt erzeugt, wobei der Energieverbrauch der erfindungsgemäßen Entstaubungsvorrichtung deutlich reduziert ist. Der gewünschte Druckaufbau erfolgt somit bei minimalem Stromverbrauch und zugleich mit minimaler Geräuschentwicklung in db(A).

Mit zwei oder mehr Exemplaren dieser erfindungsgemäßen Entstaubungsvorrichtung 10 kann insbesondere die Raumluft großer Räume effizient, leise und energiesparend gereinigt werden. Bei einer Raumgröße von bspw. 6000m³ eignen sich zwei dieser Entstaubungsvorrichtungen 10 wesentlich besser als eine große, im Zweifel stationäre Anlage mit einer Anfangs-Filterleistung von 6000m³/h.

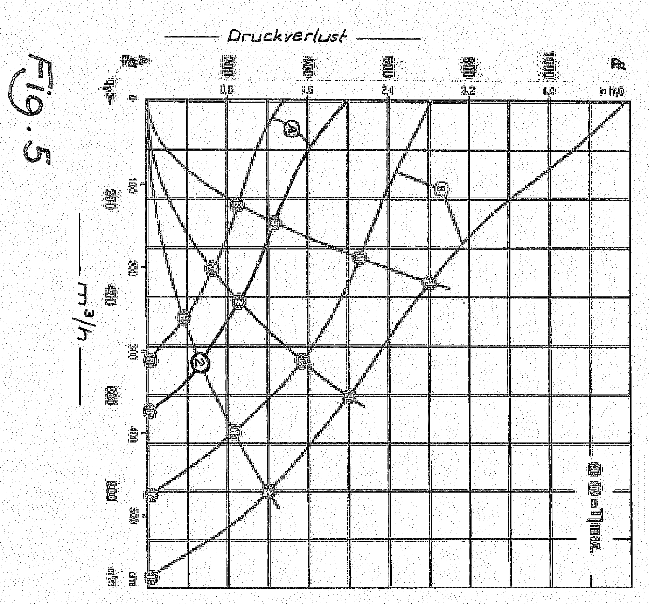

### Ausführungsbeispiel 3 (Figur 5)

Ein Radialventilator mit rückwärts gekrümmten Schaufel, der die Leistungskenndaten gemäß Linie A in Figur 5 besitzt und einen maximalen Volumenstrom von 700 m³/h erreicht, ist optimal geeignet für eine erfindungsgemäße mobile Entstaubungsvorrichtung 10 der folgenden Auslegung:

| | |
|---|---|
| Außenmaße (L × B × H) in cm: | 34 × 34 × 67 |
| Volumen des Filterraums 19: | 0,042 m³ |
| Maße des Vorfilters 29 (G4, Filterzelle) in mm: | 287 × 287 × 47 |
| Maße des Hauptfilters 28 (F9, Taschenfilter) in mm: | 287 × 287 × 300 |
| Anfangs-Filterleistung beider Filter kombiniert: | 500 m³/h |

Die Maße des Hauptfilters 28 und des Filterraums 19 sind so bemessen, dass eine Anfangs-Filterleistung von 500 m³ Luft pro Stunde erzielt wird sowie ein Anfangsdruckverlust von 140 Pascal (+/- 20 Pascal) resultiert. Dieser Startpunkt entspricht dem Punkt 2 der Linie A in Figur 5. Dabei erreicht der Ventilator 18 lediglich 75% bis 90% seiner Nennleistung und entwickelt einen Geräuschpegel von lediglich 59 db(A). Mit zunehmender Betriebsdauer wandert der Punkt 2 auf der Linie A nach links, das heißt, aufgrund der zunehmenden Verschmutzung des Hauptfilters 28 nimmt der Druckverlust zu. Umgekehrt muss die Leistung des Ventilators 18, um den Druckverlust konstant zu halten, kontinuierlich gesteigert werden. Ab einem bestimmten, frei wählbaren Punkt auf der Linie A, das heißt, bei einem definierten erhöhten Druckverlust (spätestens am dritten Betriebspunkt der Linie A in Figur 5), übermittelt das Druckmessgerät 21 ein Signal an eine Warneinrichtung, um auf den notwendigen Wechsel des Hauptfilter 28 hinzuweisen.

Bei dieser Auslegung wird bei einem niedrigeren Druckverlust eine höhere Abscheideleistung als bisher bekannt erzeugt, wobei der Energieverbrauch der erfindungsgemäßen Entstaubungsvorrichtung deutlich reduziert ist. Der gewünschte Druckaufbau erfolgt somit bei minimalem Stromverbrauch und zugleich mit minimaler Geräuschentwicklung in db(A).

Dieses Kleingerät ist besonders gut für die Verwendung eines Schwebstofffilters, bspw. eines HEPA-Filters als Hauptfilter geeignet. Diese erfindungsgemäße Entstaubungsvorrichtung 10 kann auch als Tischgerät ohne Rollen 14 verwendet werden.

## Patentansprüche

1. Mobile Entstaubungsvorrichtung (10) zur Reinigung von verschmutzter Raumluft, mit einem Gehäuse (11), in dem mindestens ein Filterelement (28, 29) aufgenommen ist, mit mindestens einem Ventilator (18) zum Ansaugen der verschmutzten Raumluft, mit einer Einlassöffnung (33) für die verschmutzte Raumluft und mit einer Auslassöffnung für gereinigte Raumluft, **dadurch gekennzeichnet, dass** die Einlassöffnung (33) sich über den gesamten Querschnitt des Gehäuses (11) erstreckt, dass die Auslassöffnung als an mindestens einer Gehäusewand (34) offener Reinluftraum (23) ausgebildet und oberhalb eines Unterbodens (15) des Gehäuses (11) angeordnet ist, dass im Gehäuse (11) oberhalb des Reinluftraums (23) ein Zwischenboden (17) aufgenommen ist, in dem der mindestens eine Ventilator (18) befestigt ist, dass im Gehäuse (11) oberhalb des Zwischenbodens (17) eine Auflageschulter (25) vorgesehen ist, auf der ein mindestens einen Hauptfilter (28) tragender Filterhalter (27) aufliegt, und dass auf dem Filterhalter (27) mindestens ein in einem Rahmen (31) gehaltener Vorfilter (29) aufliegt.

2. Entstaubungsvorrichtung nach Anspruch 1, **dadurch gekennzeichnet, dass** unterhalb des Unterbodens (15) ein durch eine Bodenplatte (13) abgeschlossener Hohlraum (16) zur Aufnahme mechanischer und elektrischer Komponenten zum Betrieb der Entstaubungsvorrichtung (10) ausgebildet ist.

3. Entstaubungsvorrichtung nach einem der vorhergehenden Ansprüche, **dadurch gekennzeichnet, dass** oberhalb des Zwischenbodens (17) ein mit dem Ventilator (18) in Wirkverbindung stehendes Druckmessgerät (21) vorgesehen ist.

4. Entstaubungsvorrichtung nach einem der vorhergehenden Ansprüche, **dadurch gekennzeichnet, dass** der Ventilator (18) als Radialventilator mit rückwärts gekrümmten Schaufeln ausgebildet ist.

5. Entstaubungsvorrichtung nach einem der vorhergehenden Ansprüche, **dadurch gekennzeichnet, dass** der Hauptfilter (28) ein Feinstaubfilter und/oder Schwebstofffilter ist.

6. Entstaubungsvorrichtung nach einem der vorhergehenden Ansprüche, **dadurch gekennzeichnet, dass** der Vorfilter (29) ein Grobstaubfilter ist.

7. Entstaubungsvorrichtung nach einem der vorhergehenden Ansprüche, **dadurch gekennzeichnet, dass** unterhalb des Hauptfilters (28) eine Vorrichtung (22) zur Abgabe von UV-Strahlung vorgesehen ist.

8. Entstaubungsvorrichtung nach einem der vorhergehenden Ansprüche, **dadurch gekennzeichnet, dass** die Filterfläche und/oder das Filtervolumen des Hauptfilters (28) so ausgelegt ist, dass beim Betrieb des Ventilators (18) unterhalb seiner maximalen Leistung ein definierter Druckverlust erzeugt wird, der auf der Kennkurve des Ventilators (18) dem definierten ersten Betriebspunkt des Ventilators (18) entspricht.

9. Entstaubungsvorrichtung nach Anspruch 8, **dadurch gekennzeichnet, dass** der Ventilator (18) für einen Betrieb bei 75% bis 90% seiner maximalen Leistung ausgelegt ist.

10. Entstaubungsvorrichtung nach Anspruch 8 oder 9, **dadurch gekennzeichnet, dass** eine Warneinrichtung vorgesehen ist, die derart ausgelegt ist, dass sie spätesten bei Erreichen des dritten Betriebspunkts auf der Kennkurve des Ventilators (18) aktiviert wird.
